# EUROPEAN PATENT APPLICATION

(11) **EP 4 618 671 A1**
(43) Date of publication of application: **17.09.2025**
(21) Application number: 23887882.1
(22) Date of filing: 31.10.2023
(51) Int. Cl.: H04W 72/12

(54) **UPLINK CHANNEL TRANSMISSION METHOD AND APPARATUS, AND TERMINAL**

(30) Priority: 07.11.2022 CN 202211386337
(71) Applicant: Vivo Mobile Communication Co., Ltd., Dongguan, Guangdong 523863 (CN)
(72) Inventor: LI, Na, Dongguan, Guangdong 523863 (CN)
(74) Representative: Shieldmark
(86) International application number: PCT/CN2023/128673
(87) International publication number: WO 2024/099192

(57) **Abstract**

This application discloses an uplink channel transmission method and apparatus, and a terminal, and belongs to the field of communication technologies. In the method, in a case that time domain resources of a plurality of to-be-transmitted uplink channels overlap, the terminal may process transmission of the plurality of uplink channels in a first manner. The plurality of uplink channels include a first PUCCH, the plurality of uplink channels further include at least one of a second PUCCH or a PUSCH, the first PUCCH carries HARQ-ACK information according to a second feedback mode, and the second PUCCH carries at least one of SR information or CSI. The first manner includes at least one of the following: discarding at least one uplink channel; multiplexing, to a same uplink channel, at least two uplink channels whose time domain resources overlap; or separately transmitting channels whose time domain resources do not overlap.

## Description

### CROSS-REFERENCE

This application claims priority to Chinese Patent Application No. 202211386337.1, filed with the China National Intellectual Property Administration on November 7, 2022 and entitled "UPLINK CHANNEL TRANSMISSION METHOD AND APPARATUS, AND TERMINAL", which is incorporated herein by reference in its entirety.

### TECHNICAL FIELD

This application belongs to the field of communication technologies, and specifically relates to an uplink channel transmission method and apparatus, and a terminal.

### BACKGROUND

In a multimedia broadcast service (Multimedia Broadcast Service, MBS) of a new radio (New Radio, NR) system, two hybrid automatic repeat request-acknowledgement (Hybrid Automatic Repeat request-ACKnowledgement, HARQ-ACK) feedback modes are supported for a multicast downlink channel (such as a physical downlink shared channel (Physical Downlink Shared Channel, PDSCH) or a physical downlink control channel (Physical Downlink Control Channel, PDCCH)). The first feedback mode is an acknowledgement/negative acknowledgement (HARQ-ACK/NACK) feedback mode, and the second feedback mode is a negative acknowledgement-only (HARQ NACK-only) feedback mode.

In the HARQ-ACK/NACK feedback mode, if successfully decoding the multicast downlink channel, a terminal (User Equipment, UE) feeds back an ACK; otherwise, the terminal feeds back a NACK.

In the HARQ NACK only feedback mode, the UE does not feed back an ACK when successfully decoding the multicast downlink channel, and feeds back NACK information when not successfully decoding the multicast downlink channel. If HARQ-ACK information of a plurality of downlink channels needs to be fed back, when all values of the HARQ-ACK information are ACKs, a PUCCH that carries a HARQ-ACK is not transmitted. That is, only when the HARQ-ACK information includes a NACK, the UE transmits the PUCCH that carries the HARQ-ACK.

On a same time domain resource, the UE may be scheduled or configured to transmit a plurality of uplink channels. For example, the UE is scheduled or configured to simultaneously transmit channels such as a physical uplink control channel (Physical Uplink Control Channel, PUCCH) that carries the HARQ-ACK and a PUCCH that carries a scheduling request (Scheduling Request, SR) information. However, a quantity of uplink channels that can be transmitted by the UE on a same time domain resource is limited due to a factor such as a peak to average power Ratio (Peak to Average Power Ratio, PAPR). Therefore, in the second feedback mode, when a plurality of uplink channels that need to be transmitted overlap in terms of time domain resource, a conflict among the plurality of uplink channels needs to be resolved.

### SUMMARY

Embodiments of this application provide an uplink channel transmission method and apparatus, and a terminal, to resolve a conflict among a plurality of uplink channels whose time domain resources overlap in a second feedback mode.

According to a first aspect, an uplink channel transmission method is provided, where the method includes:
in a case that time domain resources of a plurality of to-be-transmitted uplink channels overlap, processing, by a terminal, transmission of the plurality of uplink channels in a first manner, where
the plurality of uplink channels include a first physical uplink control channel PUCCH, the plurality of uplink channels further include at least one of a second PUCCH or a physical uplink shared channel PUSCH, the first PUCCH carries hybrid automatic repeat request-acknowledgement HARQ-ACK information according to a second feedback mode, the second feedback mode is a negative acknowledgement HARQ-NACK information-only feedback mode, and the second PUCCH carries at least one of scheduling request SR information or channel state information CSI; and
the first manner includes at least one of the following:
   discarding at least one of uplink channels whose time domain resources overlap among the plurality of uplink channels;
   multiplexing, to a same uplink channel, at least two uplink channels whose time domain resources overlap among the plurality of uplink channels; or
   separately transmitting channels whose time domain resources do not overlap among the plurality of uplink channels.

According to a second aspect, an uplink channel transmission apparatus is provided, where the apparatus includes:
a transmission processing module, configured to: in a case that time domain resources of a plurality of to-be-transmitted uplink channels overlap, process transmission of the plurality of uplink channels in a first manner, where
the plurality of uplink channels include a first physical uplink control channel PUCCH, the plurality of uplink channels further include at least one of a second PUCCH or a physical uplink shared channel PUSCH, the first PUCCH carries hybrid automatic repeat request-acknowledgement HARQ-ACK information according to a second feedback mode, the second feedback mode is a negative acknowledgement HARQ-NACK information-only feedback mode, and the second PUCCH carries at least one of scheduling request SR information or channel state information CSI; and
the first manner includes at least one of the following:
   discarding at least one of uplink channels whose time domain resources overlap among the plurality of uplink channels;
   multiplexing, to a same uplink channel, at least two uplink channels whose time domain resources overlap among the plurality of uplink channels; or
   separately transmitting channels whose time domain resources do not overlap among the plurality of uplink channels.

According to a third aspect, a terminal is provided. The terminal includes a processor and a memory. The memory stores a program or instructions capable of running on the processor, and when executed by the processor, the program or the instructions implement the steps of the method according to the first aspect.

According to a fourth aspect, a terminal is provided, including a processor and a communication interface. The processor is configured to: in a case that time domain resources of a plurality of to-be-transmitted uplink channels overlap, process transmission of the plurality of uplink channels in a first manner, where
the plurality of uplink channels include a first physical uplink control channel PUCCH, the plurality of uplink channels further include at least one of a second PUCCH or a physical uplink shared channel PUSCH, the first PUCCH carries hybrid automatic repeat request-acknowledgement HARQ-ACK information according to a second feedback mode, the second feedback mode is a negative acknowledgement HARQ-NACK information-only feedback mode, and the second PUCCH carries at least one of scheduling request SR information or channel state information CSI; and
the first manner includes at least one of the following:
   discarding at least one of uplink channels whose time domain resources overlap among the plurality of uplink channels;
   multiplexing, to a same uplink channel, at least two uplink channels whose time domain resources overlap among the plurality of uplink channels; or
   separately transmitting channels whose time domain resources do not overlap among the plurality of uplink channels.

According to a fifth aspect, a readable storage medium is provided. The readable storage medium stores a program or instructions, and when executed by a processor, the program or the instructions implement the steps of the method according to the first aspect.

According to a sixth aspect, a chip is provided. The chip includes a processor and a communication interface. The communication interface is coupled to the processor. The processor is configured to run a program or instructions to implement the steps of the method according to the first aspect.

According to a seventh aspect, a computer program/program product is provided. The computer program/program product is stored in a storage medium. The computer program/program product is executed by at least one processor to implement the steps of the method according to the first aspect.

In the embodiments of this application, in a case that time domain resources of a plurality of to-be-transmitted uplink channels overlap, the terminal may process transmission of the plurality of uplink channels in the first manner, where the first manner includes at least one of the following: discarding at least one of uplink channels whose time domain resources overlap among the plurality of uplink channels; multiplexing, to a same uplink channel, at least two uplink channels whose time domain resources overlap among the plurality of uplink channels; or separately transmitting channels whose time domain resources do not overlap among the plurality of uplink channels. Therefore, a conflict among the plurality of uplink channels whose time domain resources overlap in the second feedback mode can be resolved, thereby avoiding uncertainty of behavior of the terminal and blind detection by a base station, and improving effectiveness of a communication system.

### BRIEF DESCRIPTION OF DRAWINGS

FIG. 1 is a block diagram of a wireless communication system according to an embodiment of this application;
FIG. 2 is a schematic flowchart of an uplink channel transmission method according to an embodiment of this application;
FIG. 3 is a schematic diagram of a PUCCH overlapping group according to an embodiment of this application;
FIG. 4 is a first case that time domain resources of a plurality of uplink channels overlap according to an embodiment of this application;
FIG. 5 is a second case that time domain resources of a plurality of uplink channels overlap according to an embodiment of this application;
FIG. 6 is a third case that time domain resources of a plurality of uplink channels overlap according to an embodiment of this application;
FIG. 7 is a fourth case that time domain resources of a plurality of uplink channels overlap according to an embodiment of this application;
FIG. 8 is a fifth case that time domain resources of a plurality of uplink channels overlap according to an embodiment of this application;
FIG. 9 is a sixth case that time domain resources of a plurality of uplink channels overlap according to an embodiment of this application;
FIG. 10 is a seventh case that time domain resources of a plurality of uplink channels overlap according to an embodiment of this application;
FIG. 11 is an eighth case that time domain resources of a plurality of uplink channels overlap according to an embodiment of this application;
FIG. 12 is a ninth case that time domain resources of a plurality of uplink channels overlap according to an embodiment of this application;
FIG. 13A is a tenth case that time domain resources of a plurality of uplink channels overlap according to an embodiment of this application;
FIG. 13B is an eleventh case that time domain resources of a plurality of uplink channels overlap according to an embodiment of this application;
FIG. 13C is a twelfth case that time domain resources of a plurality of uplink channels overlap according to an embodiment of this application;
FIG. 14 is a schematic diagram of a structure of an uplink channel transmission apparatus according to an embodiment of this application;
FIG. 15 is a schematic diagram of a structure of a communication device according to this application; and
FIG. 16 is a schematic diagram of a hardware structure of a terminal according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that, terms used in this way may be interchangeable under appropriate circumstances, so that the embodiments of this application can be implemented in an order other than that illustrated or described herein. Moreover, the terms "first" and "second" typically distinguish between objects of one category rather than limiting a quantity of objects. For example, a first object may be one object or a plurality of objects. In addition, in the specification and claims, "and/or" represents at least one of connected objects, and the character "/" generally represents an "or" relationship between associated objects.

It should be noted that, a technology described in embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" are often used interchangeably in the embodiments of this application. A technology described may be used for the systems and radio technologies described above, as well as other systems and radio technologies. The following describes a new radio (New Radio, NR) system for illustrative purposes, and NR terms are used in most of the following descriptions. However, these technologies are also applicable to applications such as a 6th generation (6^{th} Generation, 6G) communication system other than NR system applications.

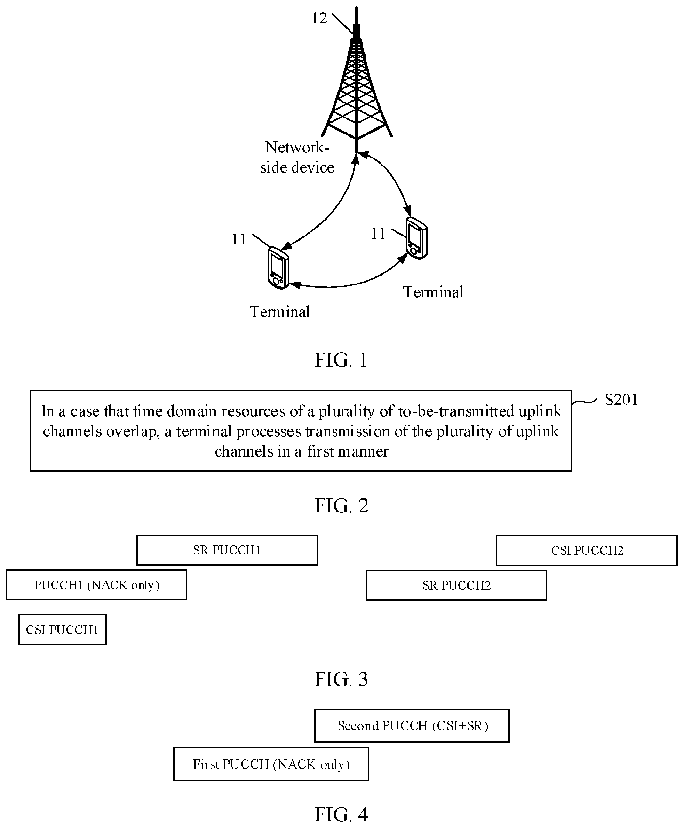

FIG. 1 is a block diagram of a wireless communication system applicable to an embodiment of this application. The wireless communication system includes a terminal 11 and a network-side device 12. The terminal 11 may be a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, such as a refrigerator, a television, a laundry machine, or a furniture), a gaming console, a personal computer (personal computer, PC), a teller machine, a self-service machine, or another terminal-side device. The wearable device includes: a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. It should be noted that a specific type of the terminal 11 is not limited in this embodiment of this application. The network-side device 12 may include an access network device or a core network device. The access network device may also be referred to as a wireless access network device, a radio access network (Radio Access Network, RAN), a radio access network function, or a radio access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a node B (Node B, NB), an evolved node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B (Home Node B, HNB), a home evolved node B (Home evolved Node B), a transmission reception point (Transmission Reception Point, TRP), or another suitable term in the field. The base station is not limited to a specific technical term, provided that a same technical effect is achieved. It needs to be noted that, in this embodiment of this application, a description is provided only by using a base station in an NR system as an example, and a specific type of the base station is not limited.

To resolve a conflict among a plurality of uplink channels whose time domain resources overlap in a second feedback mode, embodiments of this application provide an uplink channel transmission method and apparatus, which are described in detail below with reference to the accompanying drawings.

As shown in FIG. 2, an embodiment of this application provides an uplink channel transmission method, and the method may include the following steps:
Step 201: In a case that time domain resources of a plurality of to-be-transmitted uplink channels overlap, a terminal processes transmission of the plurality of uplink channels in a first manner.

The plurality of uplink channels include a first physical uplink control channel (Physical Uplink Control Channel, PUCCH), the plurality of uplink channels further include at least one of a second PUCCH or a physical uplink shared channel (Physical Uplink Shared Channel, PUSCH), the first PUCCH carries hybrid automatic repeat request-acknowledgement HARQ-ACK information according to a second feedback mode, the second feedback mode is a negative acknowledgement HARQ-NACK information-only feedback mode, and the second PUCCH carries at least one of scheduling request (Scheduling Request, SR) information or channel state information (Channel State Information, CSI). That is, in the uplink channel transmission method described in this embodiment of this application, the following application scenario is described: When the plurality of uplink channels that need to be transmitted overlap in terms of time domain resource in the HARQ NACK only feedback mode (the second feedback mode), how a conflict among the plurality of uplink channels is resolved.

It should be noted that, that the time domain resources of the plurality of uplink channels overlap includes that some or all of time domain resources of some or all of the plurality of uplink channels overlap, which is described below by using an example. Details are not described herein.

The first manner includes but is not limited to at least one of the following:
discarding at least one of uplink channels whose time domain resources overlap among the plurality of uplink channels;
multiplexing, to a same uplink channel, at least two uplink channels whose time domain resources overlap among the plurality of uplink channels; or
separately transmitting channels whose time domain resources do not overlap among the plurality of uplink channels.

It may be understood that a conflict problem caused because the plurality of uplink channels overlap in terms of time domain resource may be well resolved in a manner such as discarding and multiplexing.

In one example, the plurality of uplink channels may be a plurality of channels within a same PUCCH overlapping group (PUCCH overlapping group). Certainly, the plurality of uplink channels may not belong to a same PUCCH overlapping group.

A process of determining the PUCCH overlapping group may include: first selecting a reference PUCCH from a plurality of candidate PUCCHs, and determining, as a PUCCH overlapping group, the reference PUCCH and all PUCCHs that overlap the reference PUCCH among the plurality of candidate PUCCHs.

The selecting a reference PUCCH from a plurality of candidate PUCCHs includes one of the following manners:
(1) selecting, as the reference PUCCH, a PUCCH with an earliest start time (such as a start symbol) among the plurality of candidate PUCCHs;
(2) if start times (for example, start symbols) of the plurality of candidate PUCCHs are the same, selecting, as the reference PUCCH, a PUCCH with maximum duration (for example, a maximum quantity of symbols) among the plurality of candidate PUCCHs; and
(3) if start times (for example, start symbols) of the plurality of candidate PUCCHs are the same and duration (for example, a quantity of symbols) thereof is the same, selecting any PUCCH from the plurality of candidate PUCCHs as the reference PUCCH.

FIG. 3 is a schematic diagram of two PUCCH overlapping groups. As shown in FIG. 3, one slot has a plurality of PUCCHs (including a PUCCH1, an SR PUCCH1, a CSI PUCCH1, an SR PUCCH2, and a CSI PUCCH2). The PUCCH1 that carries the HARQ ACK information according to the HARQ NACK only feedback mode has an earliest start symbol, and therefore the PUCCH1 is used as a reference PUCCH. In this case, the SR PUCCH1, the PUCCH1, and the CSI PUCCH1 form a PUCCH overlapping group. Among the remaining PUCCHs, the SR PUCCH2 has an earliest start symbol, and therefore the SR PUCCH2 is used as a reference PUCCH of another PUCCH overlapping group, and the SR PUCCH2 and the CSI PUCCH2 that overlap in terms of time domain resource form another PUCCH overlapping group.

It should be noted that the foregoing PUCCH overlapping group is determined to process overlapped uplink channels. When the UE determines an overlapped-PUCCH overlapping group, all PUCCHs in the group are processed together to obtain one PUCCH, for example, uplink control information (Uplink Control Information, UCI) carried on all the PUCCH channels are multiplexed or some PUCCH channels are discarded.

Regardless of whether the plurality of uplink channels belong to a same PUCCH overlapping group, if the plurality of uplink channels include the second PUCCH, the second PUCCH may include the following two cases:
(1) The second PUCCH includes an SR PUCCH and a CSI PUCCH, the SR PUCCH is a PUCCH that carries the SR information, and the CSI PUCCH is a PUCCH that carries the CSI.
(2) The second PUCCH includes a PUCCH that carries both the SR information and the CSI.

The SR information includes at least one of positive (positive) SR information or negative (negative) SR information.

Optionally, if the plurality of uplink channels include the second PUCCH, there may be one or more second PUCCHs.

Optionally, if the plurality of uplink channels include the PUSCH, there may be one or more PUSCHs.

Optionally, if the plurality of uplink channels include a plurality of second PUCCHs, the first PUCCH may overlap a part of the second PUCCHs in terms of time domain resource, and does not overlap another part of the second PUCCHs in terms of time domain resource. Alternatively, the first PUCCH may overlap all the second PUCCHs in terms of time domain resource.

Optionally, the first PUCCH, the second PUCCH, and the PUSCH that are included in the plurality of uplink channels have a same priority and/or a same priority index or different priorities and/or different priority indexes. A priority of each uplink channel may be indicated or configured by a network-side device. A priority of an uplink channel may include two levels: a high priority and a low priority. The high priority may be represented as priority index=1, and the low priority may be represented as priority index=0.

Optionally, the first PUCCH, the second PUCCH, and the PUSCH that are included in the plurality of uplink channels have a same priority and/or a same priority index.

Further, when transmission of the plurality of uplink channels are processed in the first manner, if the first manner includes discarding at least one of uplink channels whose time domain resource overlap among the plurality of uplink channels, the discarding at least one of uplink channels whose time domain resource overlap among the plurality of uplink channels includes: discarding at least one uplink channel with a low priority among the plurality of uplink channels; and if the first manner includes multiplexing, to a same uplink channel, at least two uplink channels whose time domain resources overlap among the plurality of uplink channels, the multiplexing, to a same uplink channel, at least two uplink channels whose time domain resources overlap among the plurality of uplink channels includes: multiplexing, to a same uplink channel, at least two uplink channels whose time domain resources overlap and that have a same priority among the plurality of uplink channels.

The following describes overlapping cases among the plurality of uplink channels and the first manner in these overlapping cases by using several embodiments.

### Embodiment 1

If the plurality of uplink channels include the first PUCCH and the second PUCCH, the second PUCCH includes an SR PUCCH, and the SR PUCCH is a PUCCH that carries the SR information, in a case that an overlapping case among the plurality of uplink channels includes that the first PUCCH overlaps only the SR PUCCH in terms of time domain resource, and the SR PUCCH does not overlap another uplink channel other than the first PUCCH in terms of time domain resource, the first manner may include but is not limited to at least one of the following:
discarding the HARQ-ACK information carried on the first PUCCH, and transmitting the SR PUCCH; or
discarding the SR information carried on the SR PUCCH, and transmitting the first PUCCH.

The UE, depending on implementation (for example, randomly), either discards the HARQ-ACK information carried on the first PUCCH and transmits the SR PUCCH, or discards the SR information carried on the SR PUCCH and transmits the first PUCCH.

Optionally, the SR information may be positive SR information. It may be understood that the first PUCCH overlaps the PUCCH that carries the positive SR information. Considering that the first PUCCH may be common to a group and the SR information cannot be multiplexed to the first PUCCH, or a multiplexing method is relatively complex, the UE may not support multiplexing between the first PUCCH and the SR PUCCH. Instead, the UE itself determines, based on UE implementation, to discard one channel and transmit the other channel.

Further, the foregoing "UE, depending on implementation (for example, randomly)" method may be applied to a case that the first PUCCH and the SR PUCCH have a same priority and/or a same priority index. In a case that the first PUCCH and the SR PUCCH have different priorities, the terminal chooses to discard a channel with a lower priority between the first PUCCH and the SR PUCCH, and transmit a channel with a higher priority between the first PUCCH and the SR PUCCH.

Optionally, the first PUCCH and the SR PUCCH belong to a same PUCCH overlapping group, or the first PUCCH and the SR PUCCH do not belong to a same PUCCH overlapping group.

### Embodiment 2

As shown in FIG. 4, if the plurality of uplink channels include the first PUCCH and the second PUCCH, and the second PUCCH carries both the SR information and the CSI, in a case that the first PUCCH overlaps the second PUCCH in terms of time domain resource, the first manner may include:
converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion and the CSI and the SR information that are carried on the second PUCCH, where
the first feedback mode is a feedback mode in which an acknowledgement ACK/negative acknowledgement NACK is fed back.

Optionally, in Embodiment 2, the SR information may be positive SR information or negative SR information.

Optionally, the SR information may be 1 or more bits.

Optionally, in Embodiment 2, the first PUCCH and the second PUCCH belong to a same PUCCH overlapping group, or the first PUCCH and the second PUCCH do not belong to a same PUCCH overlapping group.

Optionally, in Embodiment 2, the first PUCCH and the second PUCCH have a same priority and/or a same priority index.

For example, if the first PUCCH overlaps, in terms of time domain resource, the second PUCCH that carries both the CSI and the SR information, the UE may multiplex the HARQ-ACK information obtained through conversion, the CSI, and the SR information to the CSI PUCCH for transmission. For example, the PUCCH may be determined in a same manner as that of multiplexing a HARQ-ACK without corresponding scheduled DCI and a CSI report. For example, if there is only one CSI report (report), the foregoing information is multiplexed on a PUCCH corresponding to the CSI report; if there are a plurality of CSI reports, the foregoing information is multiplexed on a PUCCH configured in a multi-CSI-PUCCH resource list (multi-CSI-PUCCH-ResourceList). Alternatively, the UE may multiplex the HARQ-ACK information obtained through conversion, the CSI, and the SR information to a PUCCH configured in PUCCH-config/PUCCH-configurationList corresponding to a first HARQ-ACK feedback mode of a multicast PDSCH or a unicast PDSCH HARQ-ACK feedback.

The first feedback mode is a feedback mode in which an acknowledgement ACK/negative acknowledgement NACK is fed back.

In multicast transmission, a HARQ-ACK feedback manner has two types of hybrid automatic repeat request-acknowledgement (Hybrid Automatic Repeat request-ACKnowledgement, HARQ-ACK) feedback modes:

The first feedback mode (first HARQ-ACK reporting mode) is an acknowledgement/negative acknowledgement (HARQ-ACK/NACK) information feedback mode. Specifically, if successfully decoding a multicast downlink channel, the UE feeds back ACK information is fed back; otherwise, the UE feeds back NACK information.

The second feedback mode (second HARQ-ACK reporting mode) is a negative acknowledgement (HARQ NACK-only) information-only feedback mode. Specifically, the UE does not feed back ACK information when successfully decoding the multicast downlink channel, and feeds back NACK information when successfully decoding the multicast downlink channel. If HARQ-ACK information of a plurality of downlink channels needs to be fed back, when all values of the HARQ-ACK information are ACKs, a PUCCH that carries a HARQ-ACK is not transmitted. That is, only when the HARQ-ACK information includes a NACK, the UE transmits the PUCCH that carries the HARQ-ACK.

The UE may be configured with one or more radio network temporary identities (group Radio Network Temporary Identity, G-RNTI) or G-CS-RNTIs, and the network-side device may configure a feedback mode of the multicast PDSCH for each G-RNTI/G-CS-RNTI. The base station may configure PUCCH-config Multicast1/pucch-ConfigurationListMulticast1 or PUCCH-config Multicast2/pucch-ConfigurationListMulticast2, where PUCCH-config Multicast1/pucch-ConfigurationListMulticast1 is used for a multicast HARQ-ACK feedback in the first feedback mode, and PUCCH-config Multicast2/pucch-ConfigurationListMulticast is used for a multicast HARQ-ACK feedback in the second feedback mode.

For a HARQ-ACK of the multicast PDSCH, if a feedback mode thereof is the second feedback mode, to support feeding back negative acknowledgement information of a plurality of transport blocks (Transmission Block, TB) in one PUCCH slot, two modes (a mode 1 and a mode 2) are specified. If the mode 1 is configured (for example, when a parameter moreThanOneNackOnlyMode is not configured), the UE converts a multi-bit HARQ-ACK into an ACK/NACK feedback, and determines, based on an indication of DCI (when the HARQ-ACK information has a corresponding scheduled DCI), a PUCCH resource from PUCCH-configMulticast1/pucch-ConfigurationListMulticast1 corresponding to the ACK/NACK. If the mode 2 is configured (for example, when a parameter moreThanOneNackOnlyMode is configured), the UE transmits different HARQ-ACK bits in a PUCCH resource selection manner. Specifically, a mapping relationship between a HARQ-ACK bits and a PUCCH resource is determined based on a predefined table (as shown in Table 1 below), to determine a PUCCH for feeding back the HARQ-ACK. The PUCCH is configured by using PUCCH-config/PUCCH-configurationList corresponding to the second feedback mode, that is, is determined by using a resource list (resourceList) in a PUCCH resource set (PUCCH resource set) configured in PUCCH-configMulticast2/pucch-ConfigurationListMulticast2.

**Table 1 Mapping of values of HARQ-ACK information bits to PUCCH resources for the second HARQ-ACK feedback mode**

| (Values of HARQ-ACK information bits) Value of HARQ-ACK information bits | | | | PUCCH resource (PUCCH resource) |
|---|---|---|---|---|
| {0} | {0,0} | {0,0,0} | {0,0,0,0} | 1^{st} PUCCH resource from *resourceList* |
| | {1,0} | {1,0,0} | {1,0,0,0} | 2^{nd} PUCCH resource from *resourceList* |
| | {0,1} | {0,1,0} | {0,1,0,0} | 3^{rd} PUCCH resource from *resourceList* |
| | | {1,1,0} | {1,1,0,0} | 4^{th} PUCCH resource from *resourceList* |
| | | {0,0,1} | {0,0,1,0} | 5^{th} PUCCH resource from *resourceList* |
| | | {1,0,1} | {1,0,1,0} | 6^{th} PUCCH resource from *resourceList* |
| | | {0,1,1} | {0,1,1,0} | 7^{th} PUCCH resource from *resourceList* |
| | | | {1,1,1,0} | 8^{th} PUCCH resource from *resourceList* |
| | | | {0,0,0,1} | 9^{th} PUCCH resource from *resourceList* |
| | | | {1,0,0,1} | 10^{th} PUCCH resource from *resourceList* |
| | | | {0,1,0,1} | 11^{th} PUCCH resource from *resourceList* |
| | | | {1,1,0,1} | 12^{th} PUCCH resource from *resourceList* |
| | | | {0,0,1,1} | 13^{th} PUCCH resource from *resourceList* |
| | | | {1,0,1,1} | 14^{th} PUCCH resource from *resourceList* |
| | | | {0,1,1,1} | 15^{th} PUCCH resource from *resourceList* |

### Embodiment 3

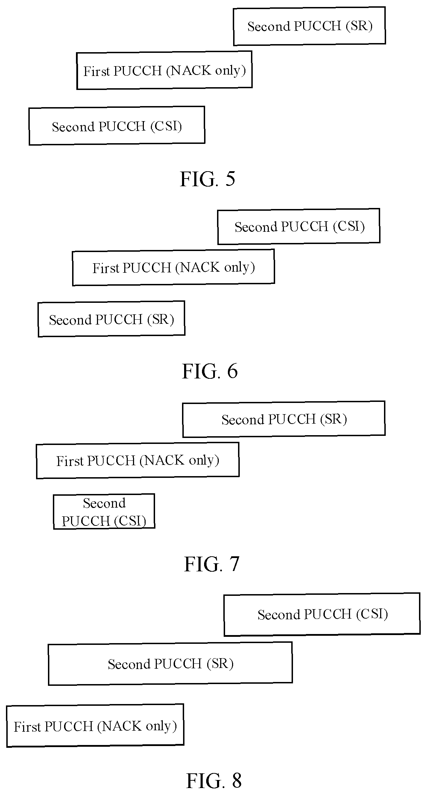

If the plurality of uplink channels include the first PUCCH and the second PUCCH, the second PUCCH includes an SR PUCCH and a CSI PUCCH, the SR PUCCH is a PUCCH that carries the SR information, and the CSI PUCCH is a PUCCH that carries the CSI, in a case that an overlapping case among the plurality of uplink channels includes that the first PUCCH overlaps the SR PUCCH in terms of time domain resource and the first PUCCH overlaps the CSI PUCCH in terms of time domain resource, the first manner may include but is not limited to at least one of the following:
(1) If a conflict between the first PUCCH and the CSI PUCCH is first processed (for example, as shown in FIG. 5, among the first PUCCH, the SR PUCCH, and the CSI PUCCH, a start time of the CSI PUCCH is earlier than start times of the SR PUCCH and the first PUCCH, and/or a quantity of symbols of the CSI PUCCH is greater than quantities of symbols of the SR PUCCH and the first PUCCH, and the CSI PUCCH does not overlap the SR PUCCH in terms of time domain resource, or the UE determines, as a reference PUCCH, the CSI PUCCH from the three PUCCHs in the foregoing manner of determining a reference PUCCH, and only the first PUCCH overlaps the CSI PUCCH in terms of time domain resource),
   the UE converts, into HARQ-ACK information according to a first feedback mode, the HARQ-ACK information that is according to the second feedback mode and that is carried on the first PUCCH, and multiplexes, to a third PUCCH, the HARQ-ACK information obtained through conversion and the CSI carried on the CSI PUCCH; and
   if the third PUCCH overlaps the SR PUCCH in terms of time domain resource, the UE multiplexes, to a same PUCCH for transmission, HARQ-ACK information and CSI carried on the third PUCCH and the SR information carried on the SR PUCCH, or discards the SR information carried on the SR PUCCH, and transmits the third PUCCH; or
   if the third PUCCH does not overlap the SR PUCCH in terms of time domain resource, the UE separately transmits the third PUCCH and the SR PUCCH.

Optionally, in the overlapping case shown in FIG. 5, the CSI PUCCH (a PUCCH with an earliest start time) is a reference PUCCH, and the first PUCCH and the CSI PUCCH belong to a same PUCCH overlapping group.

Optionally, in Manner (1), the first PUCCH, the CSI PUCCH, and the SR PUCCH have a same priority and/or a same priority index.

(2) If a conflict between the first PUCCH and the SR PUCCH is first processed (for example, as shown in FIG. 6, among the first PUCCH, the SR PUCCH, and the CSI PUCCH, a start time of the SR PUCCH is earlier than start times of the CSI PUCCH and the first PUCCH, and/or a quantity of symbols of the SR PUCCH is greater than quantities of symbols of the CSI PUCCH and the first PUCCH, and the CSI PUCCH does not overlap the SR PUCCH in terms of time domain resource, or the UE determines, as a reference PUCCH, the SR PUCCH from the three PUCCHs in the foregoing manner of determining a reference PUCCH, and only the first PUCCH overlaps the SR PUCCH in terms of time domain resource), the UE discards the SR information carried on the SR PUCCH, converts, into HARQ-ACK information according to a first feedback mode, the HARQ-ACK information that is according to the second feedback mode and that is carried on the first PUCCH, and multiplexes, to a same PUCCH for transmission, the HARQ-ACK information obtained through conversion and the CSI carried on the CSI PUCCH.

Optionally, in the overlapping case shown in FIG. 6, the SR PUCCH (a PUCCH with an earliest start time) is a reference PUCCH, and the first PUCCH and the SR PUCCH belong to a same PUCCH overlapping group.

Optionally, in Manner (2), the first PUCCH and the CSI PUCCH have a same priority and/or a same priority index.

(3) The UE converts, into HARQ-ACK information according to a first feedback mode, the HARQ-ACK information that is according to the second feedback mode and that is carried on the first PUCCH, and multiplexes, to a same PUCCH for transmission, the HARQ-ACK information obtained through conversion, the SR information carried on the SR PUCCH, and the CSI carried on the CSI PUCCH.

Optionally, in Manner (3), the first PUCCH, the SR PUCCH, and the CSI PUCCH have a same priority and/or a same priority index.
(4) The UE discards the SR information carried on the SR PUCCH.
(5) The UE discards the HARQ-ACK information carried on the first PUCCH.
(6) The terminal does not expect the overlapping case described in Embodiment 3 to occur.
(7) The terminal does not expect the overlapping case described in Embodiment 3 to occur, and the first PUCCH and the second PUCCH do not belong to a same PUCCH overlapping group.

Optionally, in Embodiment 3, the SR PUCCH may overlap or may not overlap the CSI PUCCH.

Optionally, in Embodiment 3, the SR PUCCH may be a PUCCH that carries only positive SR information.

Optionally, in Embodiment 3, the first PUCCH, the SR PUCCH, and the CSI PUCCH belong to a same PUCCH overlapping group (for example, when the CSI PUCCH overlaps the SR PUCCH in terms of time domain resource or the first PUCCH is a reference PUCCH), or the first PUCCH, the SR PUCCH, and the CSI PUCCH do not belong to a same PUCCH overlapping group (for example, when the CSI PUCCH does not overlap the SR PUCCH in terms of time domain resource and the first PUCCH is not a reference PUCCH).

### Embodiment 4

If the plurality of uplink channels include the first PUCCH and the second PUCCH, the second PUCCH includes an SR PUCCH and a CSI PUCCH, the SR PUCCH is a PUCCH that carries the SR information, and the CSI PUCCH is a PUCCH that carries the CSI, in a case that an overlapping case among the plurality of uplink channels includes that the first PUCCH overlaps the SR PUCCH in terms of time domain resource, the first PUCCH overlaps the CSI PUCCH in terms of time domain resource, and the SR PUCCH does not overlap the CSI PUCCH in terms of time domain resource (as shown in FIG. 5 to FIG. 7), the first manner may include but is not limited to at least one of the following:
(1) If a conflict between the first PUCCH and the CSI PUCCH is first processed (for example, among the first PUCCH, the SR PUCCH, and the CSI PUCCH, a start time of the CSI PUCCH is earlier than a start time of the SR PUCCH, and the SR PUCCH does not overlap the CSI PUCCH in terms of time domain resource, as shown in FIG. 5 to FIG. 7),
   the UE converts, into HARQ-ACK information according to a first feedback mode, the HARQ-ACK information that is according to the second feedback mode and that is carried on the first PUCCH, and multiplexes, to a third PUCCH, the HARQ-ACK information obtained through conversion and the CSI carried on the CSI PUCCH; and
   if the third PUCCH overlaps the SR PUCCH in terms of time domain resource, the UE multiplexes, to a same PUCCH for transmission, HARQ-ACK information and CSI carried on the third PUCCH and the SR information carried on the SR PUCCH, or discards the SR information carried on the SR PUCCH, and transmits the third PUCCH; or
   if the third PUCCH does not overlap the SR PUCCH in terms of time domain resource, the UE separately transmits the third PUCCH and the SR PUCCH.

Optionally, in the overlapping case shown in FIG. 7, if the first PUCCH, the CSI PUCCH, and the SR PUCCH belong to a same PUCCH overlapping group, the first PUCCH (for example, a PUCCH with an earliest start time and/or a PUCCH with a largest quantity of symbols) is a reference PUCCH.

Optionally, in Manner (1), the first PUCCH, the CSI PUCCH, and the SR PUCCH have a same priority and/or a same priority index.

(2) If a conflict between the first PUCCH and the SR PUCCH is first processed (for example, among the first PUCCH, the SR PUCCH, and the CSI PUCCH, a start time of the SR PUCCH is earlier than a start time of the CSI PUCCH, and the CSI PUCCH does not overlap the SR PUCCH in terms of time domain resource, as shown in FIG. 6), the UE discards the SR information carried on the SR PUCCH, converts, into HARQ-ACK information according to a first feedback mode, the HARQ-ACK information that is according to the second feedback mode and that is carried on the first PUCCH, and multiplexes, to a same PUCCH for transmission, the HARQ-ACK information obtained through conversion and the CSI carried on the CSI PUCCH.

Optionally, in Manner (2), the first PUCCH and the CSI PUCCH have a same priority and/or a same priority index.
(3) If a conflict between the first PUCCH and the SR PUCCH is first processed (for example, among the first PUCCH, the SR PUCCH, and the CSI PUCCH, a start time of the SR PUCCH is earlier than a start time of the CSI PUCCH, and the CSI PUCCH does not overlap the SR PUCCH in terms of time domain resource, as shown in FIG. 6), the UE discards the HARQ-ACK information carried on the first PUCCH, and separately transmits the SR PUCCH and the CSI PUCCH.
(4) If a conflict between the first PUCCH and the SR PUCCH is first processed (for example, among the first PUCCH, the SR PUCCH, and the CSI PUCCH, a start time of the SR PUCCH is earlier than a start time of the CSI PUCCH, and the CSI PUCCH does not overlap the SR PUCCH in terms of time domain resource, as shown in FIG. 6), the UE transmits the SR PUCCH, converts, into HARQ-ACK information according to a first feedback mode, the HARQ-ACK information that is according to the second feedback mode and that is carried on the first PUCCH, and multiplexes, to a same PUCCH for transmission, the HARQ-ACK information obtained through conversion and the CSI carried on the CSI PUCCH.

Optionally, in Manner (4), if the first PUCCH, the CSI PUCCH, and the SR PUCCH belong to a same PUCCH overlapping group, the first PUCCH (for example, a PUCCH with an earliest start time and/or a PUCCH with a largest quantity of symbols) is a reference PUCCH.

Optionally, in Manner (4), the first PUCCH and the CSI PUCCH have a same priority and/or a same priority index.

(5) The UE converts, into HARQ-ACK information according to a first feedback mode, the HARQ-ACK information that is according to the second feedback mode and that is carried on the first PUCCH, and multiplexes, to a same PUCCH for transmission, the HARQ-ACK information obtained through conversion, the SR information carried on the SR PUCCH, and the CSI carried on the CSI PUCCH.

Optionally, in Manner (5), the first PUCCH, the SR PUCCH, and the CSI PUCCH have a same priority and/or a same priority index.
(6) The UE discards the SR information carried on the SR PUCCH.
(7) The UE discards the HARQ-ACK information carried on the first PUCCH.
(8) The UE does not expect the overlapping case described in Embodiment 4 to occur.
(9) The UE does not expect the overlapping case described in Embodiment 4 to occur, and the first PUCCH and the second PUCCH do not belong to a same PUCCH overlapping group (for example, as shown in FIG. 6 or 7).

Optionally, in Embodiment 4, the SR PUCCH may be a PUCCH that carries only positive SR information.

Optionally, in Embodiment 4, the first PUCCH, the SR PUCCH, and the CSI PUCCH belong to a same PUCCH overlapping group (for example, when the first PUCCH is a reference PUCCH, that is, when the first PUCCH is a PUCCH with an earliest start time and/or a PUCCH with a largest quantity of symbols), or the first PUCCH, the SR PUCCH, and the CSI PUCCH do not belong to a same PUCCH overlapping group.

### Embodiment 5

If the plurality of uplink channels include the first PUCCH and the second PUCCH, the second PUCCH includes an SR PUCCH and a CSI PUCCH, the SR PUCCH is a PUCCH that carries the SR information, and the CSI PUCCH is a PUCCH that carries the CSI, in a case that an overlapping case among the plurality of uplink channels includes that the first PUCCH overlaps the SR PUCCH in terms of time domain resource and the SR PUCCH overlaps the CSI PUCCH in terms of time domain resource (as shown in FIG. 8 to FIG. 10), the first manner may include but is not limited to at least one of the following:
(1) The UE discards the HARQ-ACK information carried on the first PUCCH, and multiplexes, to a same PUCCH for transmission, the SR information carried on the SR PUCCH and the CSI carried on the CSI PUCCH.

Optionally, in Manner (1), the SR PUCCH and the CSI PUCCH have a same priority and/or a same priority index.

(2) The UE converts, into HARQ-ACK information according to a first feedback mode, the HARQ-ACK information that is according to the second feedback mode and that is carried on the first PUCCH, and multiplexes, to a same PUCCH for transmission, the HARQ-ACK information obtained through conversion, the SR information carried on the SR PUCCH, and the CSI carried on the CSI PUCCH.

Optionally, in Manner (2), the first PUCCH, the SR PUCCH, and the CSI PUCCH have a same priority and/or a same priority index.
(3) If a conflict between the first PUCCH and the SR PUCCH is first processed, the UE discards the HARQ-ACK information carried on the first PUCCH, and multiplexes, to a same PUCCH for transmission, the SR information carried on the SR PUCCH and the CSI carried on the CSI PUCCH.
(4) The UE does not expect the overlapping case described in Embodiment 5 to occur.
(5) The UE does not expect the overlapping case described in Embodiment 5 to occur, and the first PUCCH and the second PUCCH do not belong to a same PUCCH overlapping group.

Optionally, in Embodiment 5, the SR PUCCH may be a PUCCH that carries only positive SR information.

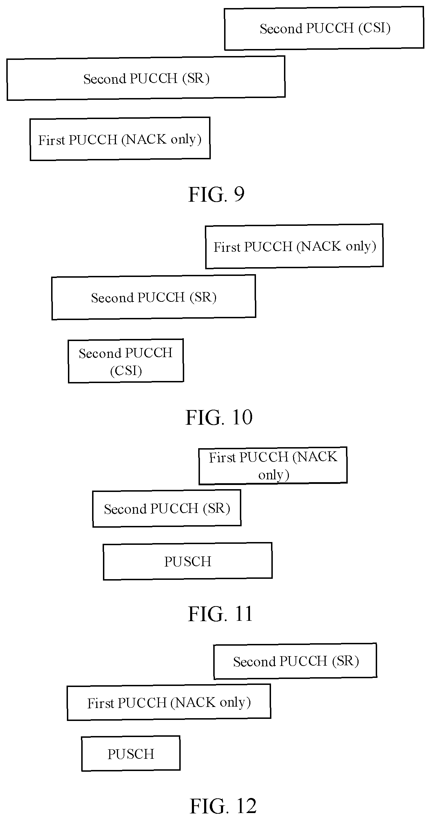

Optionally, in Embodiment 5, the first PUCCH, the SR PUCCH, and the CSI PUCCH belong to a same PUCCH overlapping group (for example, when the SR PUCCH is a reference PUCCH, that is, when the SR PUCCH is a PUCCH with an earliest start time and/or a PUCCH with a largest quantity of symbols, as shown in FIG. 9), or the first PUCCH, the SR PUCCH, and the CSI PUCCH do not belong to a same PUCCH overlapping group.

Optionally, in Embodiment 5, the first PUCCH may overlap or may not overlap the CSI PUCCH in terms of time domain resource.

### Embodiment 6

If the plurality of uplink channels include the first PUCCH and the second PUCCH, the second PUCCH includes an SR PUCCH and a CSI PUCCH, the SR PUCCH is a PUCCH that carries the SR information, and the CSI PUCCH is a PUCCH that carries the CSI, in a case that an overlapping case among the plurality of uplink channels includes that the first PUCCH overlaps the SR PUCCH in terms of time domain resource, the SR PUCCH overlaps the CSI PUCCH in terms of time domain resource, and the first PUCCH does not overlap the CSI PUCCH in terms of time domain resource (as shown in FIG. 8 to FIG. 10), the first manner may include but is not limited to at least one of the following:
(1) The UE discards the HARQ-ACK information carried on the first PUCCH, and multiplexes, to a same PUCCH for transmission, the SR information carried on the SR PUCCH and the CSI carried on the CSI PUCCH.

Optionally, in Manner (1), the SR PUCCH and the CSI PUCCH have a same priority and/or a same priority index.
(2) The UE discards the SR information carried on the SR PUCCH, and separately transmits the first PUCCH and the CSI PUCCH.
(3) The UE converts, into HARQ-ACK information according to a first feedback mode, the HARQ-ACK information that is according to the second feedback mode and that is carried on the first PUCCH, and multiplexes, to a same PUCCH for transmission, the HARQ-ACK information obtained through conversion, the SR information carried on the SR PUCCH, and the CSI carried on the CSI PUCCH.

Optionally, in Manner (2), the first PUCCH, the SR PUCCH, and the CSI PUCCH have a same priority and/or a same priority index.
(4) If a conflict between the first PUCCH and the SR PUCCH is first processed, the UE discards the HARQ-ACK information carried on the first PUCCH, and multiplexes, to a same PUCCH for transmission, the SR information carried on the SR PUCCH and the CSI carried on the CSI PUCCH.
(5) If a conflict between the first PUCCH and the SR PUCCH is first processed, the UE discards the SR information carried on the SR PUCCH, and separately transmits the first PUCCH and the CSI PUCCH.
(6) The UE does not expect the overlapping case described in Embodiment 6 to occur.
(7) The UE does not expect the overlapping case described in Embodiment 6 to occur, and the first PUCCH and the second PUCCH do not belong to a same PUCCH overlapping group.

Optionally, in Embodiment 6, the SR PUCCH may be a PUCCH that carries only positive SR information.

Optionally, in Embodiment 6, the first PUCCH, the SR PUCCH, and the CSI PUCCH belong to a same PUCCH overlapping group (for example, when the SR PUCCH is a reference PUCCH, that is, when the SR PUCCH is a PUCCH with an earliest start time and/or a PUCCH with a largest quantity of symbols, as shown in FIG. 9), or the first PUCCH, the SR PUCCH, and the CSI PUCCH do not belong to a same PUCCH overlapping group.

### Embodiment 7

If the plurality of uplink channels include the first PUCCH and the second PUCCH, the second PUCCH includes an SR PUCCH, and the SR PUCCH is a PUCCH that carries the SR information, in a case that an overlapping case among the plurality of uplink channels includes that the first PUCCH overlaps the SR PUCCH in terms of time domain resource and the SR PUCCH overlaps a fourth uplink channel in terms of time domain resource, and/or in a case that an overlapping case among the plurality of uplink channels includes that the first PUCCH overlaps the SR PUCCH in terms of time domain resource and the first PUCCH overlaps the fourth uplink channel in terms of time domain resource, the first manner may include but is not limited to at least one of the following:
(1) The UE discards the HARQ-ACK information carried on the first PUCCH, and multiplexes, to a same PUCCH for transmission, the SR information carried on the SR PUCCH and information carried on the fourth uplink channel.

Optionally, in Manner (1), the SR PUCCH and the fourth uplink channel have a same priority and/or a same priority index.

(2) The UE discards the SR information carried on the SR PUCCH, converts, into HARQ-ACK information according to a first feedback mode, the HARQ-ACK information that is according to the second feedback mode and that is carried on the first PUCCH, and multiplexes, to a same PUCCH for transmission, the HARQ-ACK information obtained through conversion and information carried on the fourth uplink channel.

Optionally, in Manner (2), the first PUCCH and the fourth uplink channel have a same priority and/or a same priority index.

(3) The UE converts, into HARQ-ACK information according to a first feedback mode, the HARQ-ACK information that is according to the second feedback mode and that is carried on the first PUCCH, and multiplexes, to a same PUCCH for transmission, the HARQ-ACK information obtained through conversion, the SR information carried on the SR PUCCH, and information carried on the fourth uplink channel.

Optionally, in Manner (3), the first PUCCH, the SR PUCCH, and the fourth uplink channel have a same priority and/or a same priority index.

Optionally, in Embodiment 7, the fourth uplink channel includes at least one of a PUSCH or a CSI PUCCH, and the CSI PUCCH is a PUCCH that carries the CSI.

Optionally, in Embodiment 7, the SR PUCCH may be a PUCCH that carries only positive SR information.

Optionally, in Embodiment 7, the first PUCCH and the SR PUCCH belong to a same PUCCH overlapping group, or the first PUCCH and the SR PUCCH do not belong to a same PUCCH overlapping group.

Optionally, in Embodiment 7, the first PUCCH may overlap or may not overlap the fourth uplink channel.

### Embodiment 8

As shown in FIG. 11, if the plurality of uplink channels include the first PUCCH, the second PUCCH, and at least one PUSCH, the second PUCCH includes an SR PUCCH, and the SR PUCCH is a PUCCH that carries the SR information, in a case that an overlapping case among the plurality of uplink channels includes that the first PUCCH overlaps the SR PUCCH in terms of time domain resource and the first PUCCH overlaps the at least one PUSCH in terms of time domain resource, the first manner may include but is not limited to at least one of the following:
(1) The UE discards the HARQ-ACK information carried on the first PUCCH and the SR information carried on the SR PUCCH, and transmits the at least one PUSCH.
(2) The UE discards the SR information carried on the SR PUCCH, converts, into HARQ-ACK information according to a first feedback mode, the HARQ-ACK information that is according to the second feedback mode and that is carried on the first PUCCH, and multiplexes, to the at least one PUSCH for transmission, the HARQ-ACK information obtained through conversion.

Optionally, in Manner (2), the first PUCCH and the at least one PUSCH have a same priority and/or a same priority index.

Optionally, in Embodiment 8, the SR PUCCH may be a PUCCH that carries only positive SR information.

Optionally, in Embodiment 8, the SR PUCCH may overlap or may not overlap the at least one PUSCH.

### Embodiment 9

As shown in FIG. 12, if the plurality of uplink channels include the first PUCCH, the second PUCCH, and at least one PUSCH, the second PUCCH includes an SR PUCCH, and the SR PUCCH is a PUCCH that carries the SR information, in a case that an overlapping case among the plurality of uplink channels specifically includes that the first PUCCH overlaps the SR PUCCH in terms of time domain resource, the first PUCCH overlaps the at least one PUSCH in terms of time domain resource, and the SR PUCCH does not overlap the at least one PUSCH in terms of time domain resource, the first manner may include but is not limited to at least one of the following:
(1) The UE discards the HARQ-ACK information carried on the first PUCCH and the SR information carried on the SR PUCCH, and transmits the at least one PUSCH.
(2) The UE discards the SR information carried on the SR PUCCH, converts, into HARQ-ACK information according to a first feedback mode, the HARQ-ACK information that is according to the second feedback mode and that is carried on the first PUCCH, and multiplexes, to the at least one PUSCH for transmission, the HARQ-ACK information obtained through conversion.

Optionally, in Manner (2), the first PUCCH and the at least one PUSCH have a same priority and/or a same priority index.
(3) The UE discards the HARQ-ACK information carried on the first PUCCH, and separately transmits the SR PUCCH and the at least one PUSCH.
(4) The UE multiplexes, to the at least one PUSCH for transmission, the HARQ-ACK information carried on the first PUCCH, and transmits the SR PUCCH.

Optionally, in Manner (4), the first PUCCH and the at least one PUSCH have a same priority and/or a same priority index.

Optionally, in Embodiment 9, the SR PUCCH may be a PUCCH that carries only positive SR information.

Embodiment 10 (scenario in which priorities and/or priority indexes of the plurality of uplink channels are different)

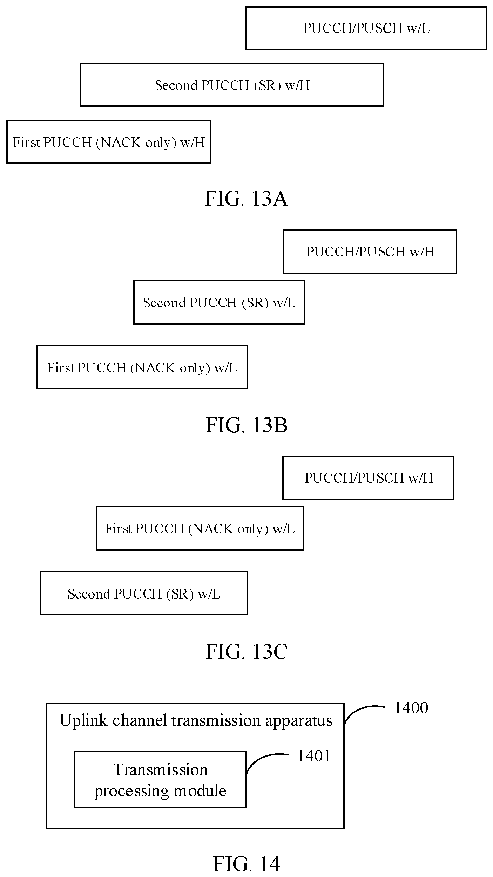

As shown in FIG. 13A to FIG. 13C, the plurality of uplink channels include the first PUCCH, the SR PUCCH, and another uplink channel, and the another uplink channel includes a PUCCH or a PUSCH.

In a scenario shown in FIG. 13A, the first PUCCH and the SR PUCCH have a high priority/a high priority index (H), and the two channels overlap in terms of time domain resource. The another uplink channel (for example, the PUCCH/PUSCH) has a low priority/a low priority index (L). A case that the time domain resources of the plurality of uplink channels overlap includes that the first PUCCH overlaps the SR PUCCH in terms of time domain resource, the SR PUCCH overlaps the another uplink channel in terms of time domain resource, and the first PUCCH does not overlap the another uplink channel (for example, the PUCCH/PUSCH) in terms of time domain resource. In a related technology, the UE first processes overlapping between channels with a same priority, and discards the first PUCCH or the SR PUCCH based on UE implementation. If the UE discards the first PUCCH, because the SR PUCCH with a high priority overlaps the another uplink channel with a low priority in terms of time domain resource, the UE cancels transmission of the another uplink channel (for example, the PUCCH/PUSCH) with a low priority, and transmits only the SR PUCCH. If the UE discards the SR PUCCH, because the first PUCCH with a high priority does not overlap the another uplink channel with a low priority in terms of time domain resource, the UE may separately transmit the first PUCCH and the another uplink channel.

To avoid blind detection by the network-side device, in the scenario (for example, the first PUCCH with a high priority/priority index overlaps the SR PUCCH with a high priority/priority index in terms of time domain resource (the SR is a positive SR), the SR PUCCH overlaps the PUCCH/PUSCH with a low priority/priority index in terms of time domain resource, and the first PUCCH does not overlap the PUCCH/PUSCH with a low priority in terms of time domain resource) shown in FIG. 13A, the network-side device or the protocol may specify behavior of the UE, that is, the first manner may include: When overlapping between the first PUCCH and the SR PUCCH in terms of time domain resource is processed, the UE discards the SR, and transmits the first PUCCH; or when overlapping between the first PUCCH and the SR PUCCH in terms of time domain resource, the UE discards the first PUCCH, and transmits the SR PUCCH, instead of determining, based on UE implementation, whether to discard the first PUCCH or the SR PUCCH.

In a scenario shown in FIG. 13B, a case that time domain resources of the first PUCCH, the SR PUCCH, and the another uplink channel (for example, the PUCCH/PUSCH) overlap is the same as the scenario shown in FIG. 13A. A difference is that the first PUCCH and the SR PUCCH have a low priority/priority index, and the another uplink channel (for example, the PUCCH/PUSCH) has a high priority/priority index. In this scenario, in the related technology, the UE first processes overlapping between channels with a same priority, and discards the first PUCCH or the SR PUCCH based on UE implementation. If the UE discards the first PUCCH, because the SR PUCCH with a low priority overlaps the another uplink channel with a high priority in terms of time domain resource, the UE cancels transmission of the SR PUCCH with a low priority, and transmits only the another uplink channel. If the UE discards the SR PUCCH, because the first PUCCH with a low priority does not overlap the another uplink channel with a high priority in terms of time domain resource, the UE separately transmits the first PUCCH and the another uplink channel. In this case, unnecessary discarding (for example, not transmitting the first PUCCH) exists on the terminal side, and the network-side device needs to perform blind detection.

To avoid the foregoing unnecessary discarding and blind detection by the network-side device, in the scenario (for example, the first PUCCH with a low priority/priority index overlaps the SR PUCCH with a low priority/priority index in terms of time domain resource (the SR is a positive SR), and one PUCCH of the first PUCCH and the SR PUCCH overlaps the another uplink channel (for example, the PUCCH/PUSCH) with a high priority/priority index in terms of time domain resource) shown in FIG. 13B, the network-side device or the protocol may specify the following (that is, the first manner may include): When overlapping between the first PUCCH and the SR PUCCH in terms of time domain resource is processed, the UE discards information carried on a channel that overlaps the another uplink channel with a high priority/priority index in terms of time domain resource, and transmits a channel that does not overlap the another uplink channel with a high priority/priority index in terms of time domain resource.

In a scenario shown in FIG. 13C, the first PUCCH and the SR PUCCH have a low priority/low priority index (L), and the two channels overlap in terms of time domain resource. The another uplink channel (for example, the PUCCH/PUSCH) has a high priority/high priority index (H). A case that the time domain resources of the plurality of uplink channels overlap includes that the first PUCCH overlaps the SR PUCCH in terms of time domain resource, the first PUCCH overlaps the another uplink channel in terms of time domain resource, and the SR PUCCH does not overlap the another uplink channel (for example, the PUCCH/PUSCH) in terms of time domain resource. In the related technology, the UE first processes overlapping between channels with a same priority, and discards the first PUCCH or the SR PUCCH based on UE implementation. If the UE discards the SR PUCCH, because the first PUCCH with a low priority overlaps the another uplink channel with a high priority in terms of time domain resource, the UE cancels transmission of the first PUCCH with a low priority, and transmits only the another uplink channel. If the UE discards the first PUCCH, because the SR PUCCH with a low priority does not overlap the another uplink channel with a high priority in terms of time domain resource, the UE separately transmits the SR PUCCH and the another uplink channel. In this case, unnecessary discarding (for example, not transmitting the SR PUCCH) exists on the terminal side, and the network-side device needs to perform blind detection.

To avoid the foregoing unnecessary discarding and blind detection by the network-side device, in the scenario (for example, the first PUCCH with a low priority/priority index overlaps the SR PUCCH with a low priority/priority index in terms of time domain resource (the SR is a positive SR), and one PUCCH of the first PUCCH and the SR PUCCH overlaps the another uplink channel (for example, the PUCCH/PUSCH) with a high priority/priority index in terms of time domain resource) shown in FIG. 13C, the network-side device or the protocol may specify the following (that is, the first manner may include): When overlapping between the first PUCCH and the SR PUCCH in terms of time domain resource is processed, the UE discards information carried on a channel that overlaps the another uplink channel with a high priority/priority index in terms of time domain resource, and transmits a channel that does not overlap the another uplink channel with a high priority/priority index in terms of time domain resource.

The foregoing ten embodiments describe different cases that the time domain resources of the plurality of uplink channels overlap in step 201. It should be noted that, the case that the time domain resources of the plurality of uplink channels overlap in step 201 may not be limited to the cases in the foregoing ten embodiments, and may be other cases, which are not enumerated in this embodiment of this application.

It should be further noted that, in a case that the plurality of uplink channels include the PUCCH and the PUSCH, overlapping between PUCCHs may be first processed, and then overlapping between the PUCCH and the PUSCH is processed. For example, in the foregoing Embodiment 9, when processing overlapping between the PUCCHs, the UE separately transmits the first PUCCH and the SR PUCCH. When processing overlapping between the PUCCH and the PUSCH, because the first PUCCH overlaps the PUSCH, the UE converts NACK only into ACK/NACK information, multiplexes, to the PUSCH, the information obtained through conversion, and separately transmits the SR PUCCH.

It may be learned from the foregoing ten embodiments that, for a same overlapping case, if transmission of the plurality of uplink channels is processed in different first manners, different processing results may be obtained. Behavior of the UE is uncertain for the network-side device, and therefore the network-side device needs to determine, through blind detection, how the UE transmits the plurality of uplink channels.

To avoid blind detection by the network-side device, the network-side device or the protocol may specify specific behavior of the UE in different overlapping cases, that is, the network-side device or the protocol may specify first manners to be specifically used by the UE in different overlapping cases, or in different overlapping cases among the plurality of uplink channels, first manners to be used by the UE may be configured by the network-side device or specified by the protocol. For example:
(1) In the overlapping case (the first PUCCH overlaps only the SR PUCCH in terms of time domain resource, and the second PUCCH does not overlap another uplink channel other than the first PUCCH in terms of time domain resource) described in the foregoing Embodiment 1, the first manner configured by the network-side device or specified by the protocol is as follows: discarding one channel of the first PUCCH and the SR PUCCH based on UE implementation, and transmitting the other channel.
(2) In the overlapping case (the first PUCCH overlaps, in terms of time domain resource, the second PUCCH that carries both the SR information and the CSI) described in the foregoing Embodiment 2, the first manner configured by the network-side device or specified by the protocol is as follows: converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion and the CSI and the SR information that are carried on the second PUCCH.
(3) In the overlapping case (the first PUCCH overlaps the SR PUCCH in terms of time domain resource, and the first PUCCH overlaps the CSI PUCCH in terms of time domain resource) described in the foregoing Embodiment 3, the first manner configured by the network-side device or specified by the protocol is one of the seven manners described in Embodiment 3. For example, the first manner configured by the network-side device or specified by the protocol is as follows: converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion, the SR information carried on the SR PUCCH, and the CSI carried on the CSI PUCCH.
(4) In the overlapping case (the first PUCCH overlaps the SR PUCCH in terms of time domain resource, the first PUCCH overlaps the CSI PUCCH in terms of time domain resource, and the SR PUCCH does not overlap the CSI PUCCH in terms of time domain resource) described in the foregoing Embodiment 4, the first manner configured by the network-side device or specified by the protocol is one of the nine manners described in Embodiment 4. For example, the first manner configured by the network-side device or specified by the protocol is as follows:
   discarding the HARQ-ACK information carried on the first PUCCH, and separately transmitting the SR PUCCH and the CSI PUCCH; or
   discarding the SR information carried on the SR PUCCH, converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion and the CSI carried on the CSI PUCCH; or
   converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion, the SR information carried on the SR PUCCH, and the CSI carried on the CSI PUCCH.
(5) In the overlapping case (the first PUCCH overlaps the SR PUCCH in terms of time domain resource, and the SR PUCCH overlaps the CSI PUCCH in terms of time domain resource) described in the foregoing Embodiment 5, the first manner configured by the network-side device or specified by the protocol is one of the four manners described in Embodiment 5. For example, the first manner configured by the network-side device or specified by the protocol is as follows:
   discarding the HARQ-ACK information carried on the first PUCCH, and multiplexing, to a same PUCCH for transmission, the SR information carried on the SR PUCCH and the CSI carried on the CSI PUCCH; or
   converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion, the SR information carried on the SR PUCCH, and the CSI carried on the CSI PUCCH.
(6) In the overlapping case (the first PUCCH overlaps the SR PUCCH in terms of time domain resource, the SR PUCCH overlaps the CSI PUCCH in terms of time domain resource, and the first PUCCH does not overlap the CSI PUCCH in terms of time domain resource) described in the foregoing Embodiment 6, the first manner configured by the network-side device or specified by the protocol is one of the five manners described in Embodiment 6. For example, the first manner configured by the network-side device or specified by the protocol is as follows:
   discarding the HARQ-ACK information carried on the first PUCCH, and multiplexing, to a same PUCCH for transmission, the SR information carried on the SR PUCCH and the CSI carried on the CSI PUCCH; or
   discarding the SR information carried on the SR PUCCH, and separately transmitting the first PUCCH and the CSI PUCCH; or
   converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion, the SR information carried on the SR PUCCH, and the CSI carried on the CSI PUCCH.
(7) In the overlapping case (the first PUCCH overlaps the SR PUCCH in terms of time domain resource, and the SR PUCCH overlaps the fourth uplink channel (the CSI PUCCH or the PUSCH) in terms of time domain resource) described in the foregoing Embodiment 7, the first manner configured by the network-side device or specified by the protocol is one of the three manners described in Embodiment 7. For example, the first manner configured by the network-side device or specified by the protocol is as follows:
   discarding the HARQ-ACK information carried on the first PUCCH, and multiplexing, to a same PUCCH for transmission, the SR information carried on the SR PUCCH and information carried on the fourth uplink channel; or
   discarding the SR information carried on the SR PUCCH, converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion and information carried on the fourth uplink channel.
(8) In the overlapping case (the first PUCCH overlaps the SR PUCCH in terms of time domain resource, and the first PUCCH overlaps the at least one PUSCH in terms of time domain resource) described in the foregoing Embodiment 8, the first manner configured by the network-side device or specified by the protocol is one of the two manners described in Embodiment 8. For example, the first manner configured by the network-side device or specified by the protocol is as follows:
   discarding the HARQ-ACK information carried on the first PUCCH and the SR information carried on the SR PUCCH, and transmitting the at least one PUSCH; or
   discarding the SR information carried on the SR PUCCH, converting, into HARQ-ACK information according to a first feedback mode, the HARQ-ACK information that is according to the second feedback mode and that is carried on the first PUCCH, and multiplexing, to the at least one PUSCH for transmission, the HARQ-ACK information obtained through conversion.
(9) In the overlapping case (the first PUCCH overlaps the SR PUCCH in terms of time domain resource, the first PUCCH overlaps the at least one PUSCH in terms of time domain resource, and the SR PUCCH overlaps the at least one PUSCH in terms of time domain resource) described in the foregoing Embodiment 8, the first manner configured by the network-side device or specified by the protocol is one of the two manners described in Embodiment 8. For example, the first manner configured by the network-side device or specified by the protocol is as follows:
   discarding the HARQ-ACK information carried on the first PUCCH and the SR information carried on the SR PUCCH, and transmitting the at least one PUSCH; or
   discarding the SR information carried on the SR PUCCH, converting, into HARQ-ACK information according to a first feedback mode, the HARQ-ACK information that is according to the second feedback mode and that is carried on the first PUCCH, and multiplexing, to the at least one PUSCH for transmission, the HARQ-ACK information obtained through conversion.
(10) In the overlapping case (the first PUCCH overlaps the SR PUCCH in terms of time domain resource, the first PUCCH overlaps the at least one PUSCH in terms of time domain resource, and the SR PUCCH does not overlap the at least one PUSCH in terms of time domain resource) described in the foregoing Embodiment 9, the first manner configured by the network-side device or specified by the protocol is one of the four manners described in Embodiment 9. For example, the first manner configured by the network-side device or specified by the protocol is as follows:
   discarding the HARQ-ACK information carried on the first PUCCH and the SR information carried on the SR PUCCH, and transmitting the at least one PUSCH; or
   discarding the SR information carried on the SR PUCCH, converting, into HARQ-ACK information according to a first feedback mode, the HARQ-ACK information that is according to the second feedback mode and that is carried on the first PUCCH, and multiplexing, to the at least one PUSCH for transmission, the HARQ-ACK information obtained through conversion; or
   discarding the HARQ-ACK information carried on the first PUCCH, and separately transmitting the SR PUCCH and the at least one PUSCH; or
   multiplexing, to the at least one PUSCH for transmission, the HARQ-ACK information carried on the first PUCCH, and transmitting the SR PUCCH.

In the uplink channel transmission method provided in the embodiments of this application, in a case that time domain resources of a plurality of to-be-transmitted uplink channels overlap, the terminal may process transmission of the plurality of uplink channels in the first manner, where the first manner includes at least one of the following: discarding at least one of uplink channels whose time domain resources overlap among the plurality of uplink channels; multiplexing, to a same uplink channel, at least two uplink channels whose time domain resources overlap among the plurality of uplink channels; or separately transmitting channels whose time domain resources do not overlap among the plurality of uplink channels. Therefore, a conflict among the plurality of uplink channels whose time domain resources overlap in the second feedback mode can be resolved, thereby avoiding uncertainty of behavior of the terminal and blind detection by a base station, and improving effectiveness of a communication system.

The foregoing describes the uplink channel transmission method provided in the embodiments of this application.

It should be noted that the uplink channel transmission method provided in the embodiments of this application may be performed by an uplink channel transmission apparatus. In the embodiments of this application, the uplink channel transmission apparatus provided in the embodiments of this application is described by using an example in which the uplink channel transmission apparatus performs the uplink channel transmission method.

With reference to the accompanying drawings, the following describes the uplink channel transmission apparatus provided in the embodiments of this application. Because the uplink channel transmission apparatus provided in the embodiments of this application corresponds to the uplink channel transmission method provided in the embodiments of this application, the uplink channel transmission apparatus provided in the embodiments of this application is relatively briefly described. For detailed content, refer to descriptions in the foregoing method embodiments.

As shown in FIG. 14, an embodiment of this application provides an uplink channel transmission apparatus 1400. The apparatus 1400 may include a transmission processing module 1401.

The transmission processing module 1401 is configured to: in a case that time domain resources of a plurality of to-be-transmitted uplink channels overlap, process, by a terminal, transmission of the plurality of uplink channels in a first manner.

The plurality of uplink channels include a first PUCCH, the plurality of uplink channels further include at least one of a second PUCCH or a PUSCH, the first PUCCH carries hybrid automatic repeat request-acknowledgement HARQ-ACK information according to a second feedback mode, the second feedback mode is a negative acknowledgement HARQ-NACK information-only feedback mode, and the second PUCCH carries at least one of scheduling request (Scheduling Request, SR) information or channel state information (Channel State Information, CSI). That is, according to the uplink channel transmission apparatus 1400 described in this embodiment of this application, the following application scenario is described: When the plurality of uplink channels that need to be transmitted overlap in terms of time domain resource in the HARQ NACK only feedback mode (the second feedback mode), how a conflict among the plurality of uplink channels is resolved.

It should be noted that, that the time domain resources of the plurality of uplink channels overlap includes that some or all of time domain resources of some or all of the plurality of uplink channels overlap. For details, refer to the foregoing Embodiment 1 to Embodiment 10.

The first manner includes but is not limited to at least one of the following:
discarding at least one of uplink channels whose time domain resources overlap among the plurality of uplink channels;
multiplexing, to a same uplink channel, at least two uplink channels whose time domain resources overlap among the plurality of uplink channels; or
separately transmitting channels whose time domain resources do not overlap among the plurality of uplink channels.

It may be understood that a conflict problem caused because the plurality of uplink channels overlap in terms of time domain resource may be well resolved in a manner such as discarding and multiplexing.

In one example, the plurality of uplink channels may be a plurality of channels within a same PUCCH overlapping group. Certainly, the plurality of uplink channels may not belong to a same PUCCH overlapping group.

A process of determining the PUCCH overlapping group may include: first selecting a reference PUCCH from a plurality of candidate PUCCHs, and determining, as a PUCCH overlapping group, the reference PUCCH and all PUCCHs that overlap the reference PUCCH among the plurality of candidate PUCCHs.

Regardless of whether the plurality of uplink channels belong to a same PUCCH overlapping group, if the plurality of uplink channels include the second PUCCH, the second PUCCH may include the following two cases:
(1) The second PUCCH includes an SR PUCCH and a CSI PUCCH, the SR PUCCH is a PUCCH that carries the SR information, and the CSI PUCCH is a PUCCH that carries the CSI.
(2) The second PUCCH includes a PUCCH that carries both the SR information and the CSI.

The SR information includes at least one of positive (positive) SR information or negative (negative) SR information.

Optionally, if the plurality of uplink channels include the second PUCCH, there may be one or more second PUCCHs.

Optionally, if the plurality of uplink channels include the PUSCH, there may be one or more PUSCHs.

Optionally, the first PUCCH, the second PUCCH, and the PUSCH that are included in the plurality of uplink channels have a same priority and/or a same priority index or different priorities and/or different priority indexes. A priority of each uplink channel may be indicated or configured by a network-side device. A priority of an uplink channel may include two levels: a high priority and a low priority. The high priority may be represented as priority index=1, and the low priority may be represented as priority index=0.

Optionally, the first PUCCH, the second PUCCH, and the PUSCH that are included in the plurality of uplink channels have a same priority and/or a same priority index.

Further, when transmission of the plurality of uplink channels are processed in the first manner, if the first manner includes discarding at least one of uplink channels whose time domain resource overlap among the plurality of uplink channels, the discarding at least one of uplink channels whose time domain resource overlap among the plurality of uplink channels includes: discarding at least one uplink channel with a low priority among the plurality of uplink channels; and if the first manner includes multiplexing, to a same uplink channel, at least two uplink channels whose time domain resources overlap among the plurality of uplink channels, the multiplexing, to a same uplink channel, at least two uplink channels whose time domain resources overlap among the plurality of uplink channels includes: multiplexing, to a same uplink channel, at least two uplink channels whose time domain resources overlap and that have a same priority among the plurality of uplink channels.

For overlapping cases among the plurality of uplink channels and the first manner in these overlapping cases, refer to the foregoing Embodiment 1 to Embodiment 9. Details are not described herein again.

It should be noted that, for a same overlapping case, if transmission of the plurality of uplink channels is processed in different first manners, different processing results may be obtained. Behavior of the UE is uncertain for the network-side device, and therefore the network-side device needs to determine, through blind detection, how the UE transmits the plurality of uplink channels.

To avoid blind detection by the network-side device, the network-side device or the protocol may specify specific behavior of the UE in different overlapping cases, that is, the network-side device or the protocol may specify first manners to be specifically used by the UE in different overlapping cases, or in different overlapping cases among the plurality of uplink channels, first manners to be used by the UE may be configured by the network-side device or specified by the protocol.

It should be noted that the apparatus shown in FIG. 14 can implement the method shown in FIG. 2 and achieve a same technical effect, and therefore is relatively briefly described. For related parts, refer to the foregoing descriptions of the embodiment shown in FIG. 2.

It should be noted that, the uplink channel transmission apparatus in this embodiment of this application may be an electronic device, for example, an electronic device with an operating system, or may be a component such as an integrated circuit or a chip in the electronic device. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

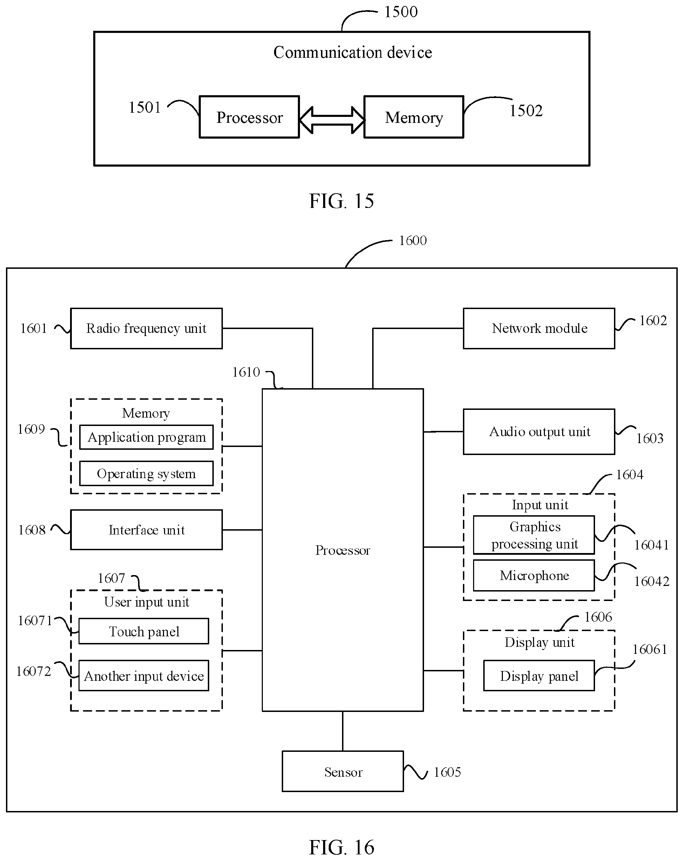

Optionally, as shown in FIG. 15, an embodiment of this application further provides a communication device 1500, including a processor 1501 and a memory 1502. The memory 1502 stores a program or instructions capable of running on the processor 1501. For example, when the communication device 1500 is a terminal, the program or the instructions, when executed by the processor 1501, implement the steps in the foregoing uplink channel transmission method embodiment, and a same technical effect can be achieved. To avoid repetition, details are not described herein again.

An embodiment of this application further provides a terminal, including a processor and a communication interface. The processor is configured to: in a case that time domain resources of multiple to-be-transmitted uplink channels overlap, process transmission of plurality of uplink channels in a first manner. The plurality of uplink channels include a first physical uplink control channel PUCCH, the plurality of uplink channels further include at least one of a second PUCCH or a physical uplink shared channel PUSCH, the first PUCCH carries hybrid automatic repeat request-acknowledgement HARQ-ACK information according to a second feedback mode, the second feedback mode is a negative acknowledgement HARQ-NACK information-only feedback mode, and the second PUCCH carries at least one of scheduling request SR information or channel state information CSI.

The first manner includes at least one of the following:
discarding at least one of uplink channels whose time domain resources overlap among the plurality of uplink channels;
multiplexing, to a same uplink channel, at least two uplink channels whose time domain resources overlap among the plurality of uplink channels; or
separately transmitting channels whose time domain resources do not overlap among the plurality of uplink channels.

The terminal embodiment corresponds to the foregoing method embodiment on the terminal side. Each implementation process and implementation of the foregoing method embodiment may be applied to the terminal embodiment, and a same technical effect can be achieved.

Specifically, FIG. 16 is a schematic diagram of a hardware structure of a terminal for implementing an embodiment of this application.

The terminal 1600 includes but is not limited to at least some components of a radio frequency unit 1601, a network module 1602, an audio output unit 1603, an input unit 1604, a sensor 1605, a display unit 1606, a user input unit 1607, an interface unit 1608, a memory 1609, a processor 1610, and the like.

A person skilled in the art may understand that the terminal 1600 may further include a power supply (for example, a battery) that supplies power to each component. The power supply may be logically connected to the processor 1610 by using a power management system, to implement functions such as charging management, discharging management, and power consumption management through the power management system. The structure of the terminal shown in FIG. 16 does not constitute a limitation on the terminal. The terminal may include more or fewer components than those shown in the figure, or combine some components, or have different component arrangements. Details are not described herein again.

It should be understood that in this embodiment of this application, the input unit 1604 may include a graphics processing unit (Graphics Processing Unit, GPU) 16041 and a microphone 16042, and the graphics processing unit 16041 processes image data of a still picture or a video obtained by an image capture apparatus (for example, a camera) in a video capture mode or an image capture mode. The display unit 1606 may include a display panel 16061, and the display panel 16061 may be configured in a form of a liquid crystal display, an organic light-emitting diode, or the like. The user input unit 1607 includes at least one of a touch panel 16071 or another input device 16072. The touch panel 16071 is also referred to as a touchscreen. The touch panel 16071 may include two parts: a touch detection apparatus and a touch controller. The another input device 16072 may include but is not limited to a physical keyboard, a function key (such as a volume control key or an on/off key), a trackball, a mouse, and an operating lever. Details are not described herein again.

In this embodiment of this application, after receiving downlink data from a network-side device, the radio frequency unit 1601 may transmit the downlink data to the processor 1610 for processing. In addition, the radio frequency unit 1601 may send uplink data to a network-side device. Generally, the radio frequency unit 1601 includes but is not limited to an antenna, an amplifier, a transceiver, a coupler, a low-noise amplifier, a duplexer, and the like.

The memory 1609 may be configured to store a software program or instructions and various types of data. The memory 1609 may mainly include a first storage area for storing a program or instructions and a second storage area for storing data. The first storage area may store an operating system, an application program or instructions required by at least one function (for example, a sound play function or an image play function), and the like. In addition, the memory 1609 may include a volatile memory or a non-volatile memory, or the memory 1609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1609 in this embodiment of this application includes but is not limited to these memories and any other suitable type of memory.

The processor 1610 may include one or more processing units. Optionally, the processor 1610 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor may not be integrated into the processor 1610.

The processor 1610 is configured to: in a case that time domain resources of a plurality of to-be-transmitted uplink channels overlap, process, by a terminal, transmission of the plurality of uplink channels in a first manner.

The plurality of uplink channels include a first physical uplink control channel PUCCH, the plurality of uplink channels further include at least one of a second PUCCH or a physical uplink shared channel PUSCH, the first PUCCH carries hybrid automatic repeat request-acknowledgement HARQ-ACK information according to a second feedback mode, the second feedback mode is a negative acknowledgement HARQ-NACK information-only feedback mode, and the second PUCCH carries at least one of scheduling request SR information or channel state information CSI.

The first manner includes at least one of the following:
discarding at least one of uplink channels whose time domain resources overlap among the plurality of uplink channels;
multiplexing, to a same uplink channel, at least two uplink channels whose time domain resources overlap among the plurality of uplink channels; or
separately transmitting channels whose time domain resources do not overlap among the plurality of uplink channels.

In the embodiments of this application, in a case that time domain resources of a plurality of to-be-transmitted uplink channels overlap, the terminal 1600 may process transmission of the plurality of uplink channels in the first manner, where the first manner includes at least one of the following: discarding at least one of uplink channels whose time domain resources overlap among the plurality of uplink channels; multiplexing, to a same uplink channel, at least two uplink channels whose time domain resources overlap among the plurality of uplink channels; or separately transmitting channels whose time domain resources do not overlap among the plurality of uplink channels. Therefore, a conflict among the plurality of uplink channels whose time domain resources overlap in the second feedback mode can be resolved, thereby avoiding uncertainty of behavior of the terminal and blind detection by a base station, and improving effectiveness of a communication system.

An embodiment of this application further provides a readable storage medium. The readable storage medium stores a program or instructions. When executed by a processor, the program or the instructions implement the processes in the foregoing uplink channel transmission method embodiment, and a same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes in the foregoing uplink channel transmission method embodiment, and a same technical effect can be achieved. To avoid repetition, details are not described herein again.

It should be understood that, the chip mentioned in this embodiment of this application may also be referred to as a system-level chip, a system chip, a chip system, or a system on chip.

An embodiment of this application further provides a computer program/program product. The computer program/program product is stored in a storage medium. The computer program/program product is executed by at least one processor to implement the processes in the foregoing uplink channel transmission method embodiment, and a same technical effect can be achieved. To avoid repetition, details are not described herein again.

An embodiment of this application further provides a communication system, including a terminal and a network-side device. The terminal may be configured to perform the steps of the uplink channel transmission method described in FIG. 2, and a same technical effect can be achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a ..." does not preclude the existence of additional identical elements in the process, method, article, or apparatus that includes the element. In addition, it should be noted that, the scope of the method and apparatus in the implementations of this application is not limited to performing functions in a sequence shown or discussed, and may further include performing functions in a basically simultaneous manner or in a reverse order based on the functions involved. For example, the described method may be performed in an order different from the order described, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by software and a necessary general-purpose hardware platform, or certainly may be implemented by hardware. However, in many cases, the former is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. An uplink channel transmission method, wherein the method comprises:
in a case that time domain resources of a plurality of to-be-transmitted uplink channels overlap, processing, by a terminal, transmission of the plurality of uplink channels in a first manner, wherein
the plurality of uplink channels comprise a first physical uplink control channel PUCCH, the plurality of uplink channels further comprise at least one of a second PUCCH or a physical uplink shared channel PUSCH, the first PUCCH carries hybrid automatic repeat request-acknowledgement HARQ-ACK information according to a second feedback mode, the second feedback mode is a negative acknowledgement HARQ-NACK information-only feedback mode, and the second PUCCH carries at least one of scheduling request SR information or channel state information CSI; and
the first manner comprises at least one of the following:
discarding at least one of uplink channels whose time domain resources overlap among the plurality of uplink channels;
multiplexing, to a same uplink channel, at least two uplink channels whose time domain resources overlap among the plurality of uplink channels; or
separately transmitting channels whose time domain resources do not overlap among the plurality of uplink channels.

2. The method according to claim 1, wherein the plurality of uplink channels are a plurality of channels within a same PUCCH overlapping group.

3. The method according to claim 1, wherein the plurality of uplink channels comprise the first PUCCH and the second PUCCH, and
the second PUCCH comprises an SR PUCCH and a CSI PUCCH, the SR PUCCH is a PUCCH that carries the SR information, and the CSI PUCCH is a PUCCH that carries the CSI;
or
the second PUCCH comprises a PUCCH that carries both the SR information and the CSI.

4. The method according to claim 3, wherein
the SR information comprises at least one of positive SR information or negative SR information.

5. The method according to any one of claims 1 to 4, wherein
there is one or more second PUCCHs.

6. The method according to claim 1, wherein
the first PUCCH, the second PUCCH, and the PUSCH have a same priority or priority index.

7. The method according to claim 1, wherein if the plurality of uplink channels comprise the first PUCCH and the second PUCCH, and the second PUCCH carries both the SR information and the CSI, in a case that the first PUCCH overlaps the second PUCCH in terms of time domain resource, the first manner comprises:
converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion and the CSI and the SR information that are carried on the second PUCCH, wherein
the first feedback mode is a feedback mode in which an acknowledgement ACK/negative acknowledgement NACK is fed back.

8. The method according to claim 1 or 2, wherein if the plurality of uplink channels comprise the first PUCCH and the second PUCCH, the second PUCCH comprises an SR PUCCH and a CSI PUCCH, the SR PUCCH is a PUCCH that carries the SR information, and the CSI PUCCH is a PUCCH that carries the CSI, in a case that an overlapping case among the plurality of uplink channels comprises that the first PUCCH overlaps the SR PUCCH in terms of time domain resource and the first PUCCH overlaps the CSI PUCCH in terms of time domain resource, the first manner comprises at least one of the following:
if a conflict between the first PUCCH and the CSI PUCCH is first processed, converting, into HARQ-ACK information according to a first feedback mode, the HARQ-ACK information that is according to the second feedback mode and that is carried on the first PUCCH, and multiplexing, to a third PUCCH, the HARQ-ACK information obtained through conversion and the CSI carried on the CSI PUCCH; and if the third PUCCH overlaps the SR PUCCH in terms of time domain resource, multiplexing, to a same PUCCH for transmission, HARQ-ACK information and CSI that are carried on the third PUCCH and the SR information carried on the SR PUCCH, or discarding the SR information carried on the SR PUCCH, and transmitting the third PUCCH; or if the third PUCCH does not overlap the SR PUCCH in terms of time domain resource, separately transmitting the third PUCCH and the SR PUCCH;
if a conflict between the first PUCCH and the SR PUCCH is first processed, discarding the SR information carried on the SR PUCCH, converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion and the CSI carried on the CSI PUCCH;
converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion, the SR information carried on the SR PUCCH, and the CSI carried on the CSI PUCCH;
discarding the SR information carried on the SR PUCCH;
discarding the HARQ-ACK information carried on the first PUCCH;
not expecting the overlapping case to occur; or
not expecting the overlapping case to occur, and the first PUCCH and the second PUCCH not belonging to a same PUCCH overlapping group, wherein
the first feedback mode is a feedback mode in which an acknowledgement ACK/negative acknowledgement NACK is fed back.

9. The method according to claim 1 or 2, wherein if the plurality of uplink channels comprise the first PUCCH and the second PUCCH, the second PUCCH comprises an SR PUCCH and a CSI PUCCH, the SR PUCCH is a PUCCH that carries the SR information, and the CSI PUCCH is a PUCCH that carries the CSI, in a case that an overlapping case among the plurality of uplink channels comprises that the first PUCCH overlaps the SR PUCCH in terms of time domain resource, the first PUCCH overlaps the CSI PUCCH in terms of time domain resource, and the SR PUCCH does not overlap the CSI PUCCH in terms of time domain resource, the first manner comprises at least one of the following:
if a conflict between the first PUCCH and the CSI PUCCH is first processed, converting, into HARQ-ACK information according to a first feedback mode, the HARQ-ACK information that is according to the second feedback mode and that is carried on the first PUCCH, and multiplexing, to a third PUCCH, the HARQ-ACK information obtained through conversion and the CSI carried on the CSI PUCCH; and if the third PUCCH overlaps the SR PUCCH in terms of time domain resource, multiplexing, to a same PUCCH for transmission, HARQ-ACK information and CSI that are carried on the third PUCCH and the SR information carried on the SR PUCCH, or discarding the SR information carried on the SR PUCCH, and transmitting the third PUCCH; or if the third PUCCH does not overlap the SR PUCCH in terms of time domain resource, separately transmitting the third PUCCH and the SR PUCCH;
if a conflict between the first PUCCH and the SR PUCCH is first processed, discarding the SR information carried on the SR PUCCH, converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion and the CSI carried on the CSI PUCCH;
if a conflict between the first PUCCH and the SR PUCCH is first processed, discarding the HARQ-ACK information carried on the first PUCCH, and separately transmitting the SR PUCCH and the CSI PUCCH;
if a conflict between the first PUCCH and the SR PUCCH is first processed, transmitting the SR PUCCH, converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion and the CSI carried on the CSI PUCCH;
converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion, the SR information carried on the SR PUCCH, and the CSI carried on the CSI PUCCH;
discarding the SR information carried on the SR PUCCH;
discarding the HARQ-ACK information carried on the first PUCCH;
not expecting the overlapping case to occur; or
not expecting the overlapping case to occur, and the first PUCCH and the second PUCCH not belonging to a same PUCCH overlapping group, wherein
the first feedback mode is a feedback mode in which an acknowledgement ACK/negative acknowledgement NACK is fed back.

10. The method according to claim 1 or 2, wherein if the plurality of uplink channels comprise the first PUCCH and the second PUCCH, the second PUCCH comprises an SR PUCCH and a CSI PUCCH, the SR PUCCH is a PUCCH that carries the SR information, and the CSI PUCCH is a PUCCH that carries the CSI, in a case that an overlapping case among the plurality of uplink channels comprises that the first PUCCH overlaps the SR PUCCH in terms of time domain resource and the SR PUCCH overlaps the CSI PUCCH in terms of time domain resource, the first manner comprises at least one of the following:
discarding the HARQ-ACK information carried on the first PUCCH, and multiplexing, to a same PUCCH for transmission, the SR information carried on the SR PUCCH and the CSI carried on the CSI PUCCH;
converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion, the SR information carried on the SR PUCCH, and the CSI carried on the CSI PUCCH;
if a conflict between the first PUCCH and the SR PUCCH is first processed, discarding the HARQ-ACK information carried on the first PUCCH, and multiplexing, to a same PUCCH for transmission, the SR information carried on the SR PUCCH and the CSI carried on the CSI PUCCH;
not expecting the overlapping case to occur; or
not expecting the overlapping case to occur, and the first PUCCH and the second PUCCH not belonging to a same PUCCH overlapping group, wherein
the first feedback mode is a feedback mode in which an acknowledgement ACK/negative acknowledgement NACK is fed back.

11. The method according to claim 1 or 2, wherein if the plurality of uplink channels comprise the first PUCCH and the second PUCCH, the second PUCCH comprises an SR PUCCH and a CSI PUCCH, the SR PUCCH is a PUCCH that carries the SR information, and the CSI PUCCH is a PUCCH that carries the CSI, in a case that an overlapping case among the plurality of uplink channels comprises that the first PUCCH overlaps the SR PUCCH in terms of time domain resource, the SR PUCCH overlaps the CSI PUCCH in terms of time domain resource, and the first PUCCH does not overlap the CSI PUCCH in terms of time domain resource, the first manner comprises at least one of the following:
discarding the HARQ-ACK information carried on the first PUCCH, and multiplexing, to a same PUCCH for transmission, the SR information carried on the SR PUCCH and the CSI carried on the CSI PUCCH;
discarding the SR information carried on the SR PUCCH, and separately transmitting the first PUCCH and the CSI PUCCH;
converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion, the SR information carried on the SR PUCCH, and the CSI carried on the CSI PUCCH;
if a conflict between the first PUCCH and the SR PUCCH is first processed, discarding the HARQ-ACK information carried on the first PUCCH, and multiplexing, to a same PUCCH for transmission, the SR information carried on the SR PUCCH and the CSI carried on the CSI PUCCH;
if a conflict between the first PUCCH and the SR PUCCH is first processed, discarding the SR information carried on the SR PUCCH, and separately transmitting the first PUCCH and the CSI PUCCH;
not expecting the overlapping case to occur; or
not expecting the overlapping case to occur, and the first PUCCH and the second PUCCH not belonging to a same PUCCH overlapping group, wherein
the first feedback mode is a feedback mode in which an acknowledgement ACK/negative acknowledgement NACK is fed back.

12. The method according to claim 1, wherein if the plurality of uplink channels comprise the first PUCCH and the second PUCCH, the second PUCCH comprises an SR PUCCH, and the SR PUCCH is a PUCCH that carries the SR information, in a case that an overlapping case among the plurality of uplink channels comprises that the first PUCCH overlaps the SR PUCCH in terms of time domain resource and the SR PUCCH overlaps a fourth uplink channel in terms of time domain resource, and/or in a case that an overlapping case among the plurality of uplink channels comprises that the first PUCCH overlaps the SR PUCCH in terms of time domain resource and the first PUCCH overlaps the fourth uplink channel in terms of time domain resource, the first manner comprises at least one of the following:
discarding the HARQ-ACK information carried on the first PUCCH, and multiplexing, to a same PUCCH for transmission, the SR information carried on the SR PUCCH and information carried on the fourth uplink channel;
discarding the SR information carried on the SR PUCCH, converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion and information carried on the fourth uplink channel; or
converting, into HARQ-ACK information according to a first feedback mode, the HARQ-ACK information that is according to the second feedback mode and that is carried on the first PUCCH, and multiplexing, to a same PUCCH for transmission, the HARQ-ACK information obtained through conversion, the SR information carried on the SR PUCCH, and information carried on the fourth uplink channel, wherein
the first feedback mode is a feedback mode in which an acknowledgement ACK/negative acknowledgement NACK is fed back.

13. The method according to claim 12, wherein
the fourth uplink channel comprises at least one of a PUSCH or a CSI PUCCH, and the CSI PUCCH is a PUCCH that carries the CSI.

14. The method according to claim 1, wherein if the plurality of uplink channels comprise the first PUCCH, the second PUCCH, and at least one PUSCH, the second PUCCH comprises an SR PUCCH, and the SR PUCCH is a PUCCH that carries the SR information, in a case that an overlapping case among the plurality of uplink channels comprises that the first PUCCH overlaps the SR PUCCH in terms of time domain resource and the first PUCCH overlaps the at least one PUSCH in terms of time domain resource, the first manner comprises at least one of the following:
discarding the HARQ-ACK information carried on the first PUCCH and the SR information carried on the SR PUCCH, and transmitting the at least one PUSCH; or
discarding the SR information carried on the SR PUCCH, converting, into HARQ-ACK information according to a first feedback mode, the HARQ-ACK information that is according to the second feedback mode and that is carried on the first PUCCH, and multiplexing, to the at least one PUSCH for transmission, the HARQ-ACK information obtained through conversion, wherein
the first feedback mode is a feedback mode in which an acknowledgement ACK/negative acknowledgement NACK is fed back.

15. The method according to claim 1, wherein if the plurality of uplink channels comprise the first PUCCH, the second PUCCH, and at least one PUSCH, the second PUCCH comprises an SR PUCCH, and the SR PUCCH is a PUCCH that carries the SR information, in a case that an overlapping case among the plurality of uplink channels specifically comprises that the first PUCCH overlaps the SR PUCCH in terms of time domain resource, the first PUCCH overlaps the at least one PUSCH in terms of time domain resource, and the SR PUCCH does not overlap the at least one PUSCH in terms of time domain resource, the first manner comprises at least one of the following:
discarding the HARQ-ACK information carried on the first PUCCH and the SR information carried on the SR PUCCH, and transmitting the at least one PUSCH;
discarding the SR information carried on the SR PUCCH, converting, into HARQ-ACK information according to a first feedback mode, the HARQ-ACK information that is according to the second feedback mode and that is carried on the first PUCCH, and multiplexing, to the at least one PUSCH for transmission, the HARQ-ACK information obtained through conversion;
discarding the HARQ-ACK information carried on the first PUCCH, and separately transmitting the SR PUCCH and the at least one PUSCH; or
multiplexing, to the at least one PUSCH for transmission, the HARQ-ACK information carried on the first PUCCH, and transmitting the SR PUCCH, wherein
the first feedback mode is a feedback mode in which an acknowledgement ACK/negative acknowledgement NACK is fed back.

16. The method according to any one of claims 8 to 13, wherein
the SR PUCCH is a PUCCH that carries only positive SR information.

17. An uplink channel transmission apparatus, wherein the apparatus comprises:
a transmission processing module, configured to: in a case that time domain resources of a plurality of to-be-transmitted uplink channels overlap, process transmission of the plurality of uplink channels in a first manner, wherein
the plurality of uplink channels comprise a first physical uplink control channel PUCCH, the plurality of uplink channels further comprise at least one of a second PUCCH or a physical uplink shared channel PUSCH, the first PUCCH carries hybrid automatic repeat request-acknowledgement HARQ-ACK information according to a second feedback mode, the second feedback mode is a negative acknowledgement HARQ-NACK information-only feedback mode, and the second PUCCH carries at least one of scheduling request SR information or channel state information CSI; and
the first manner comprises at least one of the following:
discarding at least one of uplink channels whose time domain resources overlap among the plurality of uplink channels;
multiplexing, to a same uplink channel, at least two uplink channels whose time domain resources overlap among the plurality of uplink channels; or
separately transmitting channels whose time domain resources do not overlap among the plurality of uplink channels.

18. A terminal, comprising a processor and a memory, wherein the memory stores a program or instructions capable of running on the processor, and when executed by the processor, the program or the instructions implement the steps of the uplink channel transmission method according to any one of claims 1 to 16.

19. A readable storage medium, wherein the readable storage medium stores a program or instructions, and when executed by a processor, the program or the instructions implement the uplink channel transmission method according to any one of claims 1 to 16.
